# EUROPÄISCHE PATENTSCHRIFT

(11) **EP 1 256 481 B1**
(45) Veröffentlichungstag und Bekanntmachung des Hinweises auf die Patenterteilung: **18.06.2014**
(21) Anmeldenummer: 02008800.1
(22) Anmeldetag: 19.04.2002
(51) Int. Cl.: B60M 1/26

(54) **Radspannwerk**
Tensionning pulley gear
Système de poulie de tensionnement

(30) Priorität: 10.05.2001 AT 7462001
(43) Veröffentlichungstag der Anmeldung: 13.11.2002
(73) Patentinhaber: European Trans Energy GmbH, 1100 Wien (AT)
(72) Erfinder: Winter, Hubert, 8811 Scheifling, Nr.282 (AT)
(74) Vertreter: Itze, Peter

(56) Entgegenhaltungen:
- DE-C- 945 697
- DE-U- 29 713 425

## Beschreibung

Die gegenständliche Erfindung behandelt ein Radspannwerk zum Nachspannen von Seilen, insbesondere Fahrleitungen von Eisenbahnstrecken, das an einem Mast, einer Wand oder dergleichen befestigbar ist, bestehend aus einem Grundkörper, der vorzugsweise um eine im Wesentlichen vertikale Achse drehbar gelagert ist, einer Wippe, die an der dem Grundkörper zugewandten Seite um eine im Wesentlichen horizontale Achse drehbar gelagert ist und an deren dem Grundkörper abgewandten Seite ein Radkörper um eine im Wesentlichen horizontale Achse drehbar gelagert ist sowie einer Aufhängung für die Wippe.

Radspannwerke für Fahrleitungen von Eisenbahnen werden in der Regel schwenkbar am Mast montiert. In der Praxis kommt es aufgrund der Fehlstellung des Radkörpers, auf dem die Seile aufgewickelt und geführt werden, zu einer erhöhten Reibung zwischen Radkörper und Seil, bzw. zwischen den Seilen selbst, die unterschiedliche unerwünschte Effekte, wie ruckartige Aufwicklung bzw. Abwicklung des Seiles, mangelhafte Spannung des Seiles oder sogar Seilriss, verursachen können. Dieses durch den schiefen Ablauf der Seile vom Radkörper hervorgerufene Scheuem des Seiles erfordert regelmäßige teure Instandhaltungsarbeiten und Reparaturarbeiten. Die DE 297 13 425 U1 zeigt ein solches Radspannwerk gemäß dem Oberbegriff der vorliegenden Erfindung mit keinen, bzw. nur sehr beschränkten, Einstellmöglichkeiten der Lage des Radkörpers.

Eine ähnliche Ausbildung ist auch der DE 945 697 C entnehmbar, bei welcher ein Grundkörper über zwei Laschen an Winkeleisen mittels vertikal hintereinander koaxial angeordneter Schrauben oder Nieten drehbar gelagert ist, wobei an dem Grundkörper über eine horizontale Achse Taschen zur Lagerung des Spannrades angebracht sind.

Die vorliegende Erfindung stellt sich deshalb die Aufgabe, ein konstruktiv einfaches Radspannwerk anzugeben, dessen Radkörper einfach und sicher einstellbar ist, sodass das Scheuern der Seile am Radkörper und unerwünschte Reibung zwischen Seil und Radkörper durch eine Fehlstellung des Radkörpers vermieden werden.

Diese Aufgabenstellung wird erfindungsgemäß dadurch gelöst, dass die Aufhängung der Wippe horizontal, vertikal und/oder deren Neigung und/oder die Lage der Drehachse einstellbar ist, wozu die Aufhängung der Wippe eine Einstellplatte aufweist, an welcher das Wippendrehgelenk zur Lagerung der Wippe befestigt ist, wobei die Einstellplatte am Grundkörper in horizontaler Richtung verstellbar und/oder gegenüber der Vertikalen verschwenkbar befestigt ist.. Durch die erfindungsgemäß gegebenen einfachen Einstellmöglichkeiten des Radspannwerkes, kann sichergestellt werden, dass der Radkörper im Betrieb keine Fehlstellung aufweist, wodurch unerwünschte Reibung und die damit verbundenen Probleme vermieden werden können. Diese Einstellungen können bei der Montage des Radspannwerkes einfach und schnell durchgeführt werden. Dadurch können insbesondere die Instandhaltungskosten, durch defekte Abspannungen oder durch schlecht justierte Radspannwerke, eingeschränkt werden, was, gegenüber herkömmlichen Radspannwerken, einen wesentlichen Kostenvorteil im Betrieb mit sich bringt.

Weist die Einstellplatte zumindest ein im Wesentlichen horizontales Langloch, vorzugsweise zwei oder drei in vertikaler Richtung verteilte Langlöcher, auf, durch das ein Stift, vorzugsweise eine Schraube, durchgeführt ist, der am Grundkörper befestigt ist und die Einstellplatte dadurch horizontal, vertikal und/oder deren Neigung gegenüber der Vertikalen justierbar ist, erreicht man eine sehr einfache und flexible Einstellmöglichkeit des Radkörpers.

Eine ganz besonders einfache Ausführungsform erhält man, indem das Wippendrehgelenk als Rohr ausgeführt ist, durch das ein Wippenbolzen durchgeführt wird und die Wippe mittels des Wippenbolzens mit dem Wippendrehgelenk drehbar verbunden wird.

Für das Radspannwerk ist es vorteilhaft, wenn an der Einstellplatte eine Seilstoppeinrichtung befestigt ist, da dann die Seilstoppeinrichtung auch alle Einstellbewegungen mitmacht und so relativ zum Radkörper in gleicher Lage bleibt.

Einen besonders einfachen konstruktiven und stabilen Aufbau der Wippe erhält man, wenn die Wippe aus zwei im Wesentlichen parallelen, miteinander verbundenen Trägem besteht, an deren dem Grundkörper abgewandten Seite Bohrungen zur Durchführung eines das Raddrehgelenk bildenden Radbolzens vorgesehen sind.

Diese Bohrungen können in sehr einfacher Weise zum Einstellen der Drehachse des Radkörpers verwendet werden, wenn die Bohrung in einem Formrohr als in Längsrichtung des Formrohres verlaufendes Langloch ausgeführt ist und an der Stirnseite dieses Formrohres eine Einstellschraube so angeordnet ist, dass sie auf den durchgeführten nicht drehbar gelagerten Radbolzen wirkt kann und die Bohrung im anderen Formrohr einen um mindestens 0.5 bis 1mm, vorzugsweise 1 bis 5mm, größeren Durchmesser aufweist wie der Außendurchmesser des Radbolzens misst und gegenüber dem Langloch angeordnet ist. Dies ermöglicht mit sehr einfachen Mitteln die rasche Verstellung der Drehachse des Radkörpers um einige Grad.

Die Erfindung wird anhand der beispielhaften, nicht einschränkenden Figuren 1 bis 3 beschrieben. Dabei zeigt
Fig. 1 eine Seitenansicht eines erfindungsgemäßen Radspannwerks einer Eisenbahnoberleitung,
Fig. 2 eine Detailansicht der Wippenaufhängung am Grundkörper und
Fig. 3 eine Detailansicht der Wippe mit der Radaufhängung.

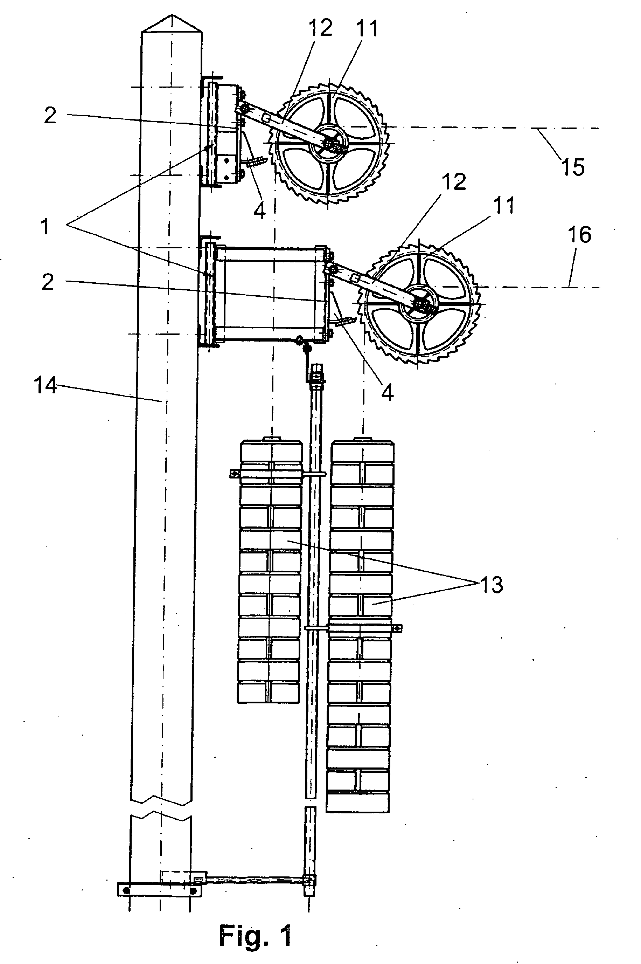

Die Fig. 1 zeigt ein Radspannwerk für eine Fahrleitung einer Eisenbahnstrecke, bestehend aus dem Tragseil 15 und dem Fahrdraht 16 begrenzter Länge. Typischerweise ist sowohl für das Tragseil 15 als auch für den Fahrdraht 16 je ein Radspannwerk vorgesehen. In diesem Ausführungsbeispiel wird die Längenänderung der Fahrleitung, z.B. durch Temperaturunterschiede, durch die Radkörper 11 in einem Verhältnis von 3:1 auf den Hub der Spanngewichte 13 übersetzt. Natürlich sind auch beliebige andere Übersetzungsverhältnisse oder andere Leitungsverhältnisse ohne Einschränkungen möglich.
Das Radspannwerk besteht jeweils aus einem Grundkörper 1, einer Einstellplatte 2, einer Wippe 12 und einem Radkörper 11. Der Grundkörper 1 ist um eine vertikale Achse drehbar mit dem Mast 14 verbunden. Am Grundkörper 1 ist eine Einstellplatte 2 befestigt, die die Aufhängung für die Wippe 12 trägt. In dieser Wippenaufhängung ist die Wippe 12 um eine horizontale Achse drehbar gelagert und trägt an ihrem anderen Ende um eine horizontale Achse drehbar gelagert den Radkörper 11. Auf der Einstellplatte 2 ist ebenfalls eine Seilstoppeinrichtung 4 angebracht. Im Falle eines Seilrisses fällt die Wippe 12 mit dem Radkörper 11 nach unten, wodurch der außen verzahnte Radkörper 11 mit der Seilstoppeinrichtung 4 in Eingriff kommt und auf das Seil wirkt und somit das Fallen des Spanngewichtes 13 verhindert wird.
In dem Ausführungsbeispiel nach Fig. 1 sind die Spanngewichte 13 und damit auch die Radkörper 11 in Richtung der gespannten Seile hintereinander angeordnet. Es sind jedoch auch andere Anordnungen möglich, wie z.B. nebeneinander angeordnete Spanngewichte 13, wo natürlich auch die Spannradwerke, bzw. die Radkörper 11, am Mast 14 versetzt angeordnet sein müssen.
Die Einstellplatte 2 und die Radkörperlagerung bieten Möglichkeiten, das Radspannwerk so zu justieren, dass die Reibung zwischen Seil, Tragseil 15 oder Fahrdraht 16, und Radkörper 11 bzw. zwischen dem aufgewickelten Seil minimiert wird. Ist das Radspannwerk nicht optimal eingestellt, streift das Seil also, z.B. durch eine Fehlstellung des Radkörpers 11, während der Bewegung am Radkörper 11 oder am aufgewickelten Seil, wird die Funktion des Radspannwerkes, nämlich die optimale Spannung der Fahrleitung zu gewährleisten beeinträchtigt. Beispielsweise tritt durch das Scheuern des Seiles am Radkörpers 11 ein erhöhter Verschleiß auf, der bis zum Riss des Seiles, mit allen daraus resultierenden Konsequenzen, wie Stillstand der Strecke, hohe Reparaturkosten, etc., führen kann. Ein weiterer oft auftretender, durch erhöhte Reibung des Seiles verursachte Effekt ist der, dass die Abwicklung bzw. Aufwicklung des Seiles ruckartig erfolgt und somit die durchgängige Spannung des Seiles nicht immer sichergestellt ist.
Um solche störenden Effekte zu vermeiden, bietet das erfindungsgemäße Radspannwerk besondere Einstellmöglichkeiten, mit denen der möglichst reibungsfreie Seillauf einfach und sicher eingestellt werden kann.

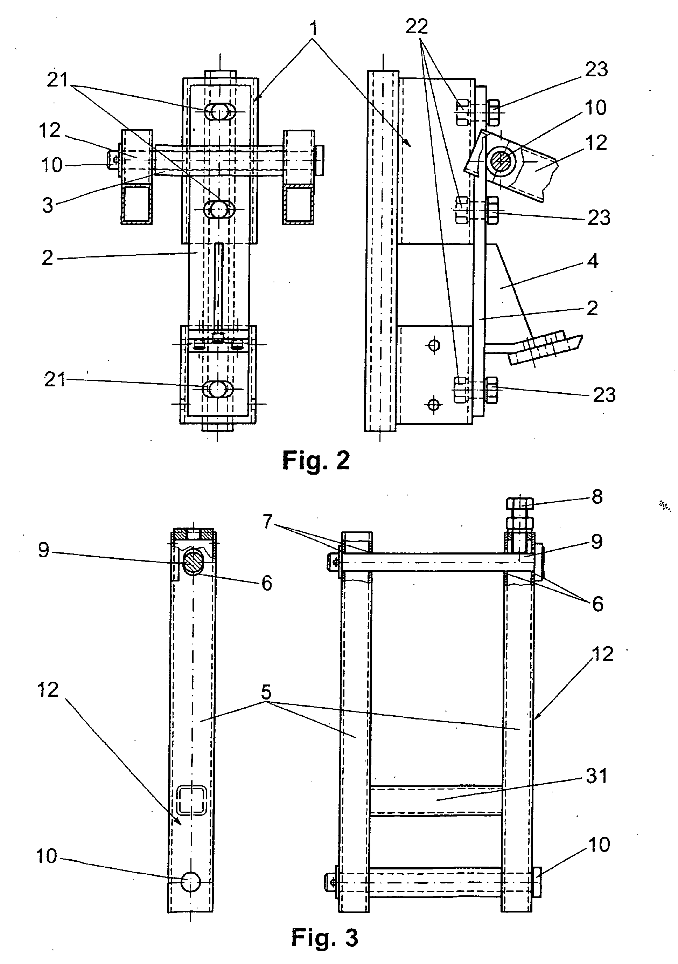

Fig. 2 zeigt in einer Detailansicht die am Grundkörper 1 befestigte Einstellplatte 2, an der ein Teil des Wippendrehgelenks 3 und die Stoppeinrichtung 4 befestigt sind. In dieser Ausführungsvariante besteht das Wippendrehgelenk 3 aus einem Rohr durch das ein mit der Wippe 12 verbundener Wippenbolzen 10 drehbar durchgeführt wird. Die Wippe 12 ist somit im Wippendrehgelenk 3 um eine horizontale Achse drehbar. Die Einstellplatte 2 weist drei horizontale Langlöcher 21 auf, über die die Einstellplatte 2 mit dem Grundkörper 1 verbunden wird. Dazu werden beispielsweise vom Grundkörper 1 Schrauben 22 durch diese Langlöcher 21 durchgeführt und mit Muttern 23 fixiert. Die Einstellplatte 2 kann dadurch in horizontaler Richtung im Rahmen des Einstellbereichs der Langlöcher 21 gegenüber dem Grundkörper 1 verstellt werden und gleichzeitig auch gegenüber der Vertikale, um eine horizontale Achse normal auf die Ebene der Einstellplatte 2, leicht verschwenkt werden. Durch die Verwendung von Beilagscheiben kann die Einstellplatte 2 bei Bedarf auch gegenüber der Vertikale um eine horizontale Achse in der Ebene der Einstellplatte 2 leicht verschwenkt werden. Selbstverständlich können auch andere Befestigungs- und Einstelleinrichtungen der Einstellplatte 2, die die gleiche Funktionalität gewährleisten, ohne Einschränkung des Erfindungsgedankens vorgesehen werden.
Die Fig. 3 zeigt in einer Drauf- und Seitenansicht die Wippe 12 mit der Lagerung in der Wippenaufhängung und der Lagerung des Radkörpers 11. Wie bereits bei Fig. 2 beschrieben ist die Wippe 12 über das Wippendrehgelenk 3 und dem Wippenbolzen 10 mit dem Grundkörper 1, bzw. der Einstellplatte 2, verbunden. Die Wippe 12 wird aus zwei parallelen Trägern 5, in diesem Beispiel in der Form von Formrohren mit rechteckigem Querschnitt, gebildet. Zur Versteifung und besseren Handbarkeit der Wippe 12 ist eine Verstrebung 31, in diesem Beispiel in Form eines Formrohres mit quadratischem Querschnitt, vorgesehen, die die beiden Träger starr miteinander verbindet. Einer der Träger 5 weist am der Wippenaufhängung abgewandten Ende ein Langloch 6 auf. An der Stirnseite dieses Trägers ist eine Einstellschraube 8 so angeordnet, dass diese auf den durch das Langloch 6 durchgeführten Radbolzen 9 wirken kann. Der andere Träger weist gegenüber dem Langloch 6 eine Bohrung 7, mit einem etwas größeren Durchmesser, beispielsweise 2mm, wie der Außendurchmesser des Radbolzens 9 misst, auf. Dadurch entsteht ein Spiel zwischen Radbolzen 9 und der Wippe 12, das in Verbindung mit der Einstellschraube 8 genutzt werden kann, die Achse des nicht drehbar gelagerten Radbolzens 9 leicht zu verstellen. Wird die Einstellschraube 8 angezogen, so wird der Radbolzen 9 in Längsrichtung des Trägers in Richtung der Wippenaufhängung verschoben, wodurch die Drehachse des Radkörpers 11 um eine vertikale Achse geschwenkt wird. Durch diese Anordnung erreicht man mögliche Einstellwinkel der Drehachse von einigen Grad, die in der Regel in der Praxis ausreichend sind. Selbstverständlich können auch andere Einstelleinrichtungen der Drehachse des Radkörpers 11, die die gleiche Funktionalität gewährleisten, ohne Einschränkung des Erfindungsgedankens vorgesehen werden.
Der Radbolzen 9 und der Wippenbolzen 10 können in einer beliebigen Art in den vorgesehen Positionen gehalten werden. Denkbar sind beispielsweise Bolzen mit einem fixen Anschlag auf einer Seite und einem Spannstift auf der anderen Seite.
Bei der Montage des Radspannwerkes kann nun die Lage der Wippe 12 und/oder der Drehachse des Radkörpers 11 so eingestellt werden, dass das Seil möglichst reibungsfrei am Radkörper 11 auf- und abgewickelt werden kann. Dies ist insbesondere der Fall, wenn das Seil in Kraftrichtung des Spanngewichtes, vorzugsweise die Vertikale, und/oder in Richtung des gespannten Seiles, vorzugsweise die Horizontale, frei, also ohne Ablenkung durch den Radkörper 11 bzw. ohne unzulässiges Scheuern am Radkörper 11 oder zwischen den Seilen selbst, hängt.

## Patentansprüche

1. Radspannwerk zum Nachspannen von Seilen, insbesondere Fahrleitungen von Eisenbahnstrecken, das an einem Mast, einer Wand oder dergleichen befestigbar ist, bestehend aus einem Grundkörper (1), der vorzugsweise um eine im Wesentlichen vertikale Achse drehbar gelagert ist, einer Wippe (12), die an der dem Grundkörper (1) zugewandten Seite um eine im Wesentlichen horizontale Achse (10) drehbar gelagert ist und an deren dem Grundkörper (1) abgewandten Seite ein Radkörper (11) um eine im Wesentlichen horizontale Achse drehbar gelagert ist und einer Aufhängung für die Wippe (12), **dadurch gekennzeichnet, dass** die Aufhängung der Wippe (12) horizontal, vertikal und/oder deren Neigung und/oder die Lage der Drehachse (9) einstellbar ist, wozu die Aufhängung der Wippe (12) eine Einstellplatte (2) aufweist, an welcher das Wippendrehgelenk (3) zur Lagerung der Wippe (12) befestigt ist, wobei die Einstellplatte (2) am Grundkörper (1) in horizontaler Richtung verstellbar und/oder gegenüber der Vertikalen verschwenkbar befestigt ist.

2. Radspannwerk nach Anspruch 1, **dadurch gekennzeichnet, dass** die Einstellplatte (2) zumindest ein im Wesentlichen horizontales Langloch (21), vorzugsweise zwei oder drei in vertikaler Richtung verteilte Langlöcher (21), aufweist, durch das ein Stift, vorzugsweise eine Schraube (23), durchgeführt ist, der mit dem Grundkörper (1) verbunden ist.

3. Radspannwerk nach Anspruch 1 oder 2, **dadurch gekennzeichnet, dass** die Wippe (12) aus zwei im Wesentlichen parallelen, miteinander verbundenen Trägern besteht, an deren dem Grundkörper (1) abgewandten Seite Bohrungen (6,7) zur Aufnahme des das Drehgelenk bildenden Radbolzens (9) vorgesehen sind.

4. Radspannwerk nach Anspruch 3, **dadurch gekennzeichnet, dass** die Bohrung (6) in einem der Träger (5) als in Richtung der Längsachse des Trägers (5) verlaufendes Langloch ausgebildet ist, wobei an der Stirnseite dieses Trägers (5) eine Einstellschraube (8) angeordnet ist, die auf den nicht drehbar gelagerten Radbolzen (9) einwirkt, und wobei die Bohrung (7) im anderen Träger (5) einen um mindestens 0,5 bis 1 mm, vorzugsweise 1 bis 5 mm, größeren Durchmesser aufweist als der Außendurchmesser des Radbolzens (9) und dem Langloch (6) gegenüber angeordnet ist.

## Claims

1. Pulley tensioning gear for tensioning cables, in particular overhead lines of railway lines, which gear can be fastened to a mast, a wall or the like, consisting of a base body (1) which is preferably rotatably mounted about a substantially vertical axis, a rocker (12) which is rotatably mounted, on the side facing the base body (1), about a substantially horizontal axis (10) and, on whose side facing away from the base body (1), a pulley body (11) is rotatably mounted about a substantially horizontal axis, and a suspension for the rocker (12), **characterised in that** the suspension of the rocker (12) is adjustable horizontally, vertically and/or its inclination and/or the position of the rotational axis (9) is adjustable, for which the suspension of the rocker (12) has an adjusting plate (2), to which the rocker rotational joint (3) for mounting the rocker (12) is fastened, the adjusting plate (2) being fastened to the base body (1) so as to be adjustable in the horizontal direction and/or pivotable with respect to the vertical.

2. Pulley tensioning gear according to Claim 1, **characterised in that** the adjusting plate (2) has at least one substantially horizontal elongated hole (21), preferably two or three elongated holes (21) distributed in the vertical direction, through which hole a pin, preferably a screw (23), is passed, which pin is connected to the base body (1).

3. Pulley tensioning gear according to Claim 1 or 2, **characterised in that** the rocker (12) consists of two substantially parallel, interconnected supports, on the side of which facing away from the base body (1) there are provided bores (6,7) for receiving the pulley bolt (9) constituting the rotational joint.

4. Pulley tensioning gear according to Claim 3, **characterised in that** the bore (6) in one of the supports (5) is formed as an elongated hole running in the direction of the longitudinal axis of the support (5), there being arranged at the end side of this support (5) an adjusting screw (8) which acts on the non-rotatably mounted pulley bolt (9), and the bore (7) in the other support (5) having a diameter greater by at least 0.5 to 1 mm, preferably 1 to 5 mm, than the outside diameter of the pulley bolt (9) and being arranged opposite the elongated hole (6).

## Revendications

1. Système de poulie de tensionnement servant à serrer ultérieurement des câbles, en particulier des caténaires de tronçons de voie ferrée, qui peut être fixé au niveau d'un mât, d'un mur ou similaire, constitué d'un corps de base (1), qui est logé de manière à pouvoir tourner de préférence autour d'un axe essentiellement vertical, d'une bascule (12), qui est logée au niveau du côté tourné vers le corps de base (1) de manière à pouvoir tourner autour d'un axe (10) essentiellement horizontal et au niveau du côté, opposé au corps de base (1), de laquelle est logé un corps de poulie (11) de manière à pouvoir tourner autour d'un axe essentiellement horizontal, et d'une suspension pour la bascule (12), **caractérisé en ce que** la suspension de la bascule (12) peut être réglée de manière horizontale, verticale, et/ou **en ce que** l'inclinaison de ladite bascule et/ou la position de l'axe de rotation (9) peuvent être réglées, la suspension de la bascule (12) présentant à cet effet une plaque de réglage (2), au niveau de laquelle l'articulation de rotation de bascule (3) est fixée pour supporter la bascule (12), sachant que la plaque de réglage (2) peut être déplacée au niveau du corps de base (1) dans une direction horizontale et/ou est fixée de manière à pouvoir pivoter par rapport à la verticale.

2. Système de poulie de tensionnement selon la revendication 1, **caractérisé en ce que** la plaque de réglage (2) présente au moins un trou oblong (21) essentiellement horizontal, de préférence deux ou trois trous oblongs (21) répartis dans la direction verticale, à travers lequel est guidée une tige, de préférence une vis (23), qui est reliée au corps de base (1).

3. Système de poulie de tensionnement selon la revendication 1 ou 2, **caractérisé en ce que** la bascule (12) est constituée de deux supports essentiellement parallèles, reliés l'un à l'autre, sur le côté, opposé au corps de base (1), desquels sont prévus des alésages (6, 7) servant à recevoir le boulon de poulie (9) formant l'articulation de rotation.

4. Système de poulie de tensionnement selon la revendication 3, **caractérisé en ce que** l'alésage (6) est réalisé dans l'un des supports (5) sous la forme d'un trou oblong s'étendant en direction de l'axe longitudinal du support (5), sachant qu'une vis de réglage (8) est disposée au niveau du côté frontal dudit support (5), laquelle vis de réglage agit sur le boulon de poulie (9) logé de manière à ne pas pouvoir tourner, et sachant que l'alésage (7) présente, dans l'autre support (5), un diamètre plus grand d'au moins 0,5 à 1 mm, de préférence de 1 à 5 mm que le diamètre extérieur du boulon de poulie (9) et est disposé de manière à faire face au trou oblong (6).
